# EUROPÄISCHE PATENTSCHRIFT

(11) **EP 4 559 150 B1**
(45) Veröffentlichungstag und Bekanntmachung des Hinweises auf die Patenterteilung: **03.06.2026**
(21) Anmeldenummer: 24754940.5
(22) Anmeldetag: 07.08.2024
(51) Int. Cl.: H04L 9/40, H04W 4/44, H04W 12/069, H04W 12/50

(54) **VERFAHREN ZUM VERBINDEN EINES FAHRZEUGS MIT EINEM ACCESS POINT**
METHOD FOR CONNECTING A VEHICLE TO AN ACCESS POINT
PROCÉDÉ DE CONNEXION D'UN VÉHICULE À UN POINT D'ACCÈS

(30) Priorität: 02.09.2023 DE 102023003600
(43) Veröffentlichungstag der Anmeldung: 28.05.2025
(73) Patentinhaber: Mercedes-Benz Group AG, 70372 Stuttgart (DE)
(72) Erfinder: NAPHOLZ, Bernd, 71126 Gaeufelden (DE)
(74) Vertreter: Novagraaf Group
(86) Internationale Anmeldenummer: PCT/EP2024/072292
(87) Internationale Veröffentlichungsnummer: WO 2025/045537

(56) Entgegenhaltungen:
- US-A1- 2009 212 928
- US-A1- 2014 303 837
- US-A1- 2018 054 843
- US-B1- 10 104 547
- JOERG GEIGER: "Fritzbox Kindersicherung perfekt einrichten - CHIP", 1 February 2021 (2021-02-01), pages 1 - 17, XP093279976, Retrieved from the Internet <URL:https://www.chip.de/news/Fritzbox-Kindersicherung-perfekt-einrichten_183270691.html> [retrieved on 20250522]

## Beschreibung

Die Erfindung betrifft ein Verfahren zum Verbinden eines Fahrzeugs mit einem Access Point.

Wird ein Fahrzeug beispielsweise in eine Werkstatt gebracht, muss für jedes Fahrzeug manuell eine Verbindung zu den Access Points der Werkstatt aufgebaut werden. Hierbei handelt es sich insbesondere um WLAN Access Points, die bei dem Werkstattbesuch von den Werkstattmitarbeitern manuell aktiviert werden müssen.

Dasselbe gilt beispielsweise dann, wenn ein Flottenfahrzeug bzw. ein Firmenfahrzeug in einen speziellen Betriebsmodus gebracht wird, um beispielsweise das Rechtemanagement der Fahrzeuge einzustellen bzw. zu aktivieren.

Aus dem Stand der Technik sind WPA2-Enterprise-Authentifizierungen, gewöhnliche WPA2-, WPA3-WLAN-Verbindungen über SSID-Verschlüsselung oder auch die Nutzung von Zertifikaten oder Nutzernamen bekannt, um Fahrzeuge zu identifizieren und Teilnehmer zu unterscheiden.

Aus der EP 2 939 391 B1 ist ein Verfahren zum Authentifizieren von einem Benutzerzugang in einem Datenpaketnetzwerk bekannt, wobei das Datenpaketnetzwerk eine Vielzahl von öffentlichen Hotspot-Zugangspunkten aufweist. Dadurch kann ein Zugang für autorisierte Benutzer bereitgestellt werden. Dabei werden anhand von ersten Authentifizierungskriterien Authentifizierungen von Benutzern vorgenommen, wobei der öffentliche Hotspot-Zugangspunkt genutzt wird. Der Benutzer selbst nutzt ein assoziiertes privates Netzwerk.

Die WO 2021/151486 A1 offenbart ein Verfahren zum Aufbauen einer Datenverbindung zwischen einem Endgerät in einem Fahrzeug und einem Zentralmodul eines stationären lokalen Netzwerks, sowie ein Datenübertragungs-System zur Durchführung des Verfahrens.

In der DE 10 2005 028 663 A1 wird ein Kommunikationssystem beschrieben zum sicheren Kommunizieren von mindestens einer von mehreren Komponenten eines Fahrzeugs über eine drahtlose Kommunikationsverbindung mit mindestens einem externen Kommunikationspartner, wobei die mehreren Komponenten jeweils mindestens ein Kommunikationsmodul zum Datenaustauschen umfassen.

Weiterhin kann auf die US 2018/054843 A1 verwiesen werden, die ein Verfahren zur Kommunikation eines Fahrzeugs mit einer Kontrolleinrichtung zeigt, wobei eine WLAN-Verbindung zwischen dem Fahrzeug und der Kontrolleinrichtung automatisiert und verschlüsselt aufgebaut wird.

Weiterhin wird auf Joerg Geiger: "Fritzbox Kindersicherung perfekt einrichten - CHIP , 1. Februar 2021, Seiten 1-17, URL:https://www.chip.de/news/Fritzbox-Kindersicherung-perfekt-einrichten_183270691.html verwiesen.

Nachteilig ist das Verfahren abhängig von öffentlichen Hotspot-Zugangspunkten, authentifizierten Benutzern sowie einem assoziierten private Netzwerk.

Die Aufgabe der vorliegenden Erfindung besteht nun darin, ein Verfahren anzugeben, welches die vorgenannten Nachteile überwindet.

Erfindungsgemäß wird diese Aufgabe durch ein Verfahren zum Verbinden eines Fahrzeugs mit einem Access Point mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Im Kern der erfindungsgemäßen Vorrichtung wird eine WLAN-Verbindung zwischen dem Fahrzeug und dem Access Point selbstständig aufgebaut, wobei notwendige Anmeldeinformationen über eine sichere Verbindung übermittelt werden und wobei eine Verschlüsselung von einem Betriebsmodus des Fahrzeugs abhängt, wobei unterschiedliche Betriebsmodi unterschiedliche Arten der Verschlüsselung aufweisen und abhängig von den übermittelten Anmeldeinformationen dem Fahrzeug unterschiedliche Rechte zugeordnet werden. Bei dem Betriebsmodus kann es sich beispielsweise um einen "Werkstatt-Modus" handeln, wobei notwendige Anmeldeinformationen zur Durchführung der vorzunehmenden Handlungen übermittelt werden können. Des Weiteren kann es sich bei den Betriebsmodus um einen "Rechtemanagement-Modus" handeln, der insbesondere für Firmenfahrzeuge bzw. Flottenfahrzeuge von Interesse ist. Abhängig von den übermittelten Daten werden dabei den Fahrzeugen unterschiedliche Rechte zugeordnet.

Die Art der Verschlüsselung hängt dabei vom Betriebsmodus des Fahrzeugs ab. So können unterschiedliche Verschlüsselungstechnologien bzw. Entschlüsselungstechnologien verwendet werden, bei welcher die notwendigen Anmeldeinformationen lediglich über eine sichere Verbindung übermittelt werden, und daher nicht von unbefugten Personen entwendet werden können.

Das Verfahren ist zum Verbinden eines Fahrzeugs mit einem Access Point ausgebildet. Der Access Point kann beispielsweise einer Werkstatt, einem Firmen-Netzwerk oder einer andersartigen Lokalität zugeordnet sein. Es können eine Mehrzahl von Access Points vorgesehen sein, die den unterschiedlichen Lokalitäten zugeordnet sind.

Wenn sich das Fahrzeug nicht in einem bestimmten Betriebsmodus befindet, so kann bevorzugt keine Verbindung zu den Access Point der Lokalität, wie beispielsweise einer Werkstatt, aufgebaut werden. Dadurch kann sichergestellt werden, dass nur Informationen ausgetauscht werden, wenn sich das Fahrzeug in einem bestimmten Betriebsmodus befindet.

Bevorzugt kann es sich bei dem Betriebsmodus um einen Werkstatt-Modus handeln, wobei selbstständig eine WLAN-Verbindung zwischen dem Fahrzeug und der Werkstatt als Access Point aufgebaut wird. Mit anderen Worten kann durch Auswertung des "Werkstatt-Modus" des Fahrzeugs eigenständig der WLAN-Verbindungsaufbau zwischen dem Fahrzeug und dem Access Point der Werkstatt erfolgen. Dazu kann insbesondere eine WPA2-Enterprise-Authentifizierung ohne weitere manuell durchzuführende Aktionen aufgebaut werden.

Gemäß einer sehr vorteilhaften Weiterbildung der Idee kann es dabei vorgesehen sein, dass es sich bei den Anmeldeinformationen um zumindest ein Zertifikat und/oder WiFi credentials handelt. So kann die Auswertung des "Werkstatt-Modus" des Fahrzeugs als Trigger zum selbständigen WLAN-Verbindungsaufbau zwischen dem Fahrzeug und dem Access Point der Werkstatt dienen, wobei notwendige Anmelderinformationen, wie insbesondere WiFi credentials und Zertifikate, über eine sichere Verbindung, wie insbesondere VPN, von einem Server bezogen werden können. Die Anmelderinformationen können ebenso im Fahrzeug sicher abgelegt sein, beispielsweise in einem Secure-Modul.

Dabei kann es gemäß einer vorteilhaften Ausgestaltung vorgesehen sein, dass die sichere Verbindung eine VPN-Verbindung ist, wobei die Informationen von einem Server bezogen werden. Dies wird insbesondere verwendet, wenn sich das Fahrzeug beispielsweise in einem Werkstatt-Modus befindet.

Eine weitere vorteilhafte Ausgestaltung kann es vorsehen, dass die sichere Verbindung eine WPA2-Enterprise-Authentifizierung ist, die ohne manuell durchzuführende Aktionen durchgeführt wird. Dies kann beispielsweise für unterschiedliche Betriebsmodi von Flottenfahrzeugen bzw. Firmenfahrzeugen eingesetzt werden. So können die Flottenfahrzeuge oder Firmenfahrzeuge über einen speziellen Betriebsmodus eigenständig eine WLAN-Verbindung zwischen dem jeweiligen Fahrzeug und dem Access Point der Firma per WPA2-Enterprise-Authentifizierung ohne weitere manuell durchzuführende Aktionen aufbauen. Insbesondere kann dadurch ein auf das jeweilige Fahrzeug individualisiertes Rechtemanagement realisiert werden.

Gemäß einer sehr vorteilhaften Weiterbildung der Idee kann es dabei vorgesehen sein, dass die Fahrzeuge einer Fahrzeugflotte und/oder Firmenfahrzeuge über einen speziellen Betriebsmodus eigenständig mit der Firma als Access Point verbunden werden.

Dabei kann es gemäß einer vorteilhaften Ausgestaltung vorgesehen sein, dass die Anmeldeinformationen im Fahrzeug über eine Sicherungsfunktion sicher abgelegt sind. Dazu können insbesondere Zertifikate verwendet werden.

Eine weitere vorteilhafte Ausgestaltung kann es vorsehen, dass für jedes Fahrzeug ein individualisiertes Rechtemanagement realisiert wird. Dies ist insbesondere bei Firmenfahrzeugen bzw. Flottenfahrzeugen vorteilhaft, da für das jeweilige Fahrzeug ein individualisiertes Rechtemanagement mit geringem Zeitaufwand realisiert werden kann.

Weitere vorteilhafte Ausgestaltungen des erfindungsgemäßen Verfahrens zum Verbinden eines Fahrzeugs mit einem Access Point ergeben sich auch aus dem Ausführungsbeispiel, welches nachfolgend unter Bezugnahme auf die Figuren näher dargestellt ist.

Dabei zeigen:
- Fig. 1: eine mögliche Ausführungsform des Verfahrens;
- Fig. 2: eine mögliche Ausführungsform des Verfahrens.

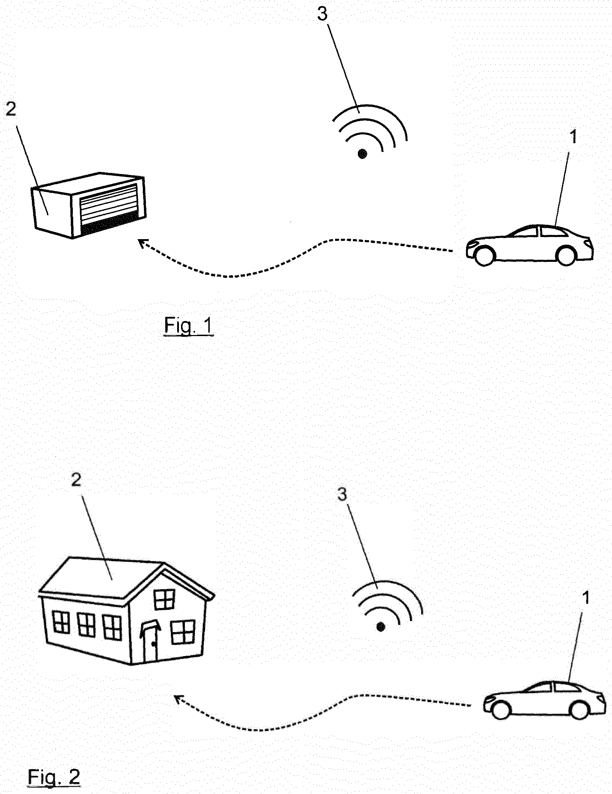

In der Darstellung der Fig. 1 ist eine mögliche Ausführungsform des Verfahrens gezeigt, wobei ein Fahrzeug 1 mit einem Access Point 2 einer Werkstatt automatisch verbunden werden kann. Dabei wird eine WLAN-Verbindung 3 zwischen dem Fahrzeug 1 und dem Access Point 2 selbstständig aufgebaut, wobei notwendige Anmeldeinformationen über eine sichere Verbindung übermittelt werden können. Mit anderen Worten erfolgt durch die Auswertung des "Werkstatt-Modus" des Fahrzeugs ein eigenständiger Aufbau einer WLAN-Verbindung zwischen dem Fahrzeug 1 und dem Access Point 2. Eine Verschlüsselung, ob die Anmeldeinformationen übertragen werden können oder nicht, hängt dabei von einem Betriebsmodus des Fahrzeugs ab. Bei dem Betriebsmodus kann es sich beispielsweise um einen Werkstatt-Modus handeln. Dadurch, dass das Fahrzeug 1 automatisch eine Verbindung zu dem WLAN-Accesspoint der Werkstatt aufbauen kann, ist ein manuelles Eingreifen eines Werkstattmitarbeiters nicht mehr notwendig. Die Anmeldeinformationen werden insbesondere über WiFi credentials oder Zertifikate entschlüsselt.

In Fig. 2 ist eine weitere Möglichkeit des Verfahrens gezeigt, wobei das Fahrzeug 1 mit einer Firma bzw. einem Firmen-Netzwerk verbunden werden kann. Dazu wird das Fahrzeug 1 mit dem Access Point 2 der Firma bzw. des Firmen-Netzwerks verbunden, wobei der WLAN-Verbindungsaufbau wie bereits in Figur 1 beschrieben erfolgen kann. Es kann dabei eine Verbesserung des Rechtemanagements für Flottenfahrzeuge oder Firmenfahrzeuge erfolgen, wobei insbesondere Zeit bei der Authentifizierung der Fahrzeuge eingespart wird.

Das Verfahren bietet daher insbesondere den Vorteil, dass ein eigenständiger, automatisierter WLAN-Verbindungsaufbau zwischen dem jeweiligen Fahrzeug und zumindest einem Access Point einer Werkstatt oder eines Firmen-Netzwerks erfolgen kann, ohne dass manuelle Aktionen erforderlich sind. Es kann dadurch insbesondere Zeit eingespart werden, da Arbeitsschritte der manuellen Eingabe entfallen. Des Weiteren können Arbeitsplätze eingespart werden, da ein händischer Eingriff beim Verbindungsaufbau zwischen dem Fahrzeug und dem Accesspoint nicht mehr notwendig ist.

## Patentansprüche

1. Verfahren zum Verbinden eines Fahrzeugs (1) mit einem Access Point (2),
wobei eine WLAN-Verbindung (3) zwischen dem Fahrzeug (1) und dem Access Point (2) selbstständig aufgebaut wird, wobei notwendige Anmeldeinformationen über eine sichere Verbindung übermittelt werden,
**dadurch gekennzeichnet, dass**
eine Verschlüsselung von einem Betriebsmodus des Fahrzeugs (1) abhängt, wobei unterschiedliche Betriebsmodi unterschiedliche Arten der Verschlüsselung aufweisen, und abhängig von den übermittelten Anmeldeinformationen dem Fahrzeug unterschiedliche Rechte zugeordnet werden.

2. Verfahren nach Anspruch 1,
**dadurch gekennzeichnet, dass**
es sich bei dem Betriebsmodus um einen Werkstatt-Modus handelt, wobei selbstständig eine WLAN-Verbindung (3) zwischen dem Fahrzeug (1) und der Werkstatt als Access Point (2) aufgebaut wird.

3. Verfahren nach Anspruch 1 oder 2,
**dadurch gekennzeichnet, dass**
es sich bei den Anmeldeinformationen um zumindest ein Zertifikat und/oder WiFi credentials handelt.

4. Verfahren nach Anspruch 1, 2 oder 3,
**dadurch gekennzeichnet, dass**
die sichere Verbindung eine VPN-Verbindung ist, wobei die Informationen von einem Server bezogen werden.

5. Verfahren nach einem der Ansprüche 1 bis 4,
**dadurch gekennzeichnet, dass**
die sichere Verbindung eine WPA2-Enterprise-Authentifizierung ist, die ohne manuell durchzuführende Aktionen durchgeführt wird.

6. Verfahren nach einem der Ansprüche 1 bis 5,
**dadurch gekennzeichnet, dass**
die Fahrzeuge (1) einer Fahrzeugflotte und/oder Firmenfahrzeuge über einen speziellen Betriebsmodus eigenständig mit der Firma als Access Point (2) verbunden werden.

7. Verfahren nach einem der Ansprüche 1 bis 6,
**dadurch gekennzeichnet, dass**
die Anmeldeinformationen im Fahrzeug (1) über eine Sicherungsfunktion sicher abgelegt sind.

8. Verfahren nach einem der Ansprüche 1 bis 7,
**dadurch gekennzeichnet, dass**
für jedes Fahrzeug (1) ein individualisiertes Rechtemanagement realisiert wird.

## Claims

1. Method for connecting a vehicle (1) to an access point (2),
with a WLAN connection (3) being automatically established between the vehicle (1) and the access point (2), necessary login information being transmitted via a secure connection,
**characterized in that**
encryption depends on an operating mode of the vehicle (1), different operating modes having different types of encryption, and different rights being assigned to the vehicle depending on the login information transmitted.

2. Method according to claim 1,
**characterized in that**
the operating mode is a workshop mode, with a WLAN connection (3) being automatically established between the vehicle (1) and the workshop as an access point (2).

3. Method according to claim 1 or claim 2,
**characterized in that**
the login information consists of at least one certificate and/or WiFi credentials.

4. Method according to claim 1, claim 2 or claim 3,
**characterized in that**
the secure connection is a VPN connection, the information being obtained from a server.

5. Method according to any of claims 1 to 4,
**characterized in that**
the secure connection is a WPA2 Enterprise authentication, which is performed without any actions to be performed manually.

6. Method according to any of claims 1 to 5,
**characterized in that**
the vehicles (1) of a vehicle fleet and/or company vehicles are independently connected to the company as an access point (2) via a special operating mode.

7. Method according to any of claims 1 to 6,
**characterized in that**
the login information is securely stored in the vehicle (1) via a backup function.

8. Method according to any of claims 1 to 7,
**characterized in that**
for each vehicle (1) an individualized rights management system is implemented.

## Revendications

1. Procédé pour la connexion d'un véhicule (1) à un point d'accès (2),
dans lequel une connexion WLAN (3) est établie de manière autonome entre le véhicule (1) et le point d'accès (2), dans lequel des informations de connexion nécessaires sont transmises par l'intermédiaire d'une connexion sécurisée,
**caractérisé en ce que**
un chiffrement dépend d'un mode de fonctionnement du véhicule (1), dans lequel différents modes de fonctionnement présentent différents types de chiffrement, et différents droits sont attribués au véhicule en fonction des informations de connexion transmises.

2. Procédé selon la revendication 1,
**caractérisé en ce que**
le mode de fonctionnement est un mode atelier, dans lequel une connexion WLAN (3) est établie de manière autonome entre le véhicule (1) et l'atelier en tant que point d'accès (2).

3. Procédé selon la revendication 1 ou 2,
**caractérisé en ce que**
les informations de connexion sont au moins un certificat et/ou un authentifiant WiFi.

4. Procédé selon la revendication 1, 2 ou 3,
**caractérisé en ce que**
la connexion sécurisée est une connexion RPV, dans lequel les informations sont obtenues à partir d'un serveur.

5. Procédé selon l'une des revendications 1 à 4,
**caractérisé en ce que**
la connexion sécurisée est une authentification WPA2-Enterprise effectuée sans action à effectuer manuellement.

6. Procédé selon l'une des revendications 1 à 5,
**caractérisé en ce que**
les véhicules (1) d'une flotte de véhicules et/ou des véhicules d'entreprise sont connectés de manière autonome à l'entreprise en tant que point d'accès (2) par l'intermédiaire d'un mode de fonctionnement spécial.

7. Procédé selon l'une des revendications 1 à 6,
**caractérisé en ce que**
les informations de connexion sont stockées de manière sécurisée dans le véhicule (1) par l'intermédiaire d'une fonction de sécurité.

8. Procédé selon l'une des revendications 1 à 7,
**caractérisé en ce que**
une gestion de droits individualisée est réalisée pour chaque véhicule (1).
